# EUROPÄISCHE PATENTSCHRIFT

(11) **EP 3 461 317 B1**
(45) Veröffentlichungstag und Bekanntmachung des Hinweises auf die Patenterteilung: **13.05.2020**
(21) Anmeldenummer: 18190620.7
(22) Anmeldetag: 24.08.2018
(51) Int. Cl.: A01F 15/00, A01F 15/07

(54) **LANDWIRTSCHAFTLICHE BALLENPRESSE**
AGRICULTURAL BALING PRESS
PRESSE-RAMASSEUSE AGRICOLE

(30) Priorität: 27.09.2017 DE 102017122393
(43) Veröffentlichungstag der Anmeldung: 03.04.2019
(73) Patentinhaber: Usines CLAAS France S.A.S, 57140 St. Rémy / Woippy (FR)
(72) Erfinder: Baros, Geoffroy, 90130 Montreux Chateau (FR); Laruelle, Thibault, 57130 Ars sur Moselle (FR); Becker, Guillaume, 57220 Ottonviue (FR)
(74) Vertreter: CLAAS Gruppe

(56) Entgegenhaltungen:
- EP-A1- 3 132 673
- EP-A1- 3 275 305
- EP-B1- 1 602 269

## Beschreibung

Die vorliegende Anmeldung betrifft eine landwirtschaftliche Ballenpresse nach dem Oberbegriff von Anspruch 1. diese umfasst eine Wickeleinrichtung, mittels derer ein jeweils gepresster Ballen mit einem Wickelmaterial einwickelbar ist. Das Wickelmaterial ist auf Wickelrollen gelagert, die wiederum in einem Rollenlager an der Ballenpresse vorgehalten werden können. Sobald eine Wickelrolle leer ist, das heißt über kein weiteres Wickelmaterial verfügt, muss die Wickelrolle an der Wickeleinrichtung gegen eine volle Wickelrolle ausgetauscht werden.

Ballenpressen der beschriebenen Art sind im Stand der Technik bereits bekannt. Hierzu wird beispielhaft auf die Europäische Patentschrift EP 1 602 269 B1 hingewiesen. Diese betrifft eine Ballenpresse, bei der eine Mehrzahl von Wickelrollen in einem Rollenlager an der Ballenpresse vorgehalten werden, wobei die Ballenpresse mit einer Transporteinrichtung ausgestattet ist, mittels derer die Wickelrollen in dem Rollenlager bewegbar sind. Auf diese Weise können die Wickelrollen nacheinander in eine Übergabestellung bewegt werden, von der ausgehend sie mittels einer Übergabevorrichtung nachgeladen werden können.

Die bekannte Ballenpresse hat den Nachteil, dass die dort offenbarte Kombination aus Transporteinrichtung und Übergabevorrichtung vergleichsweise komplex konstruiert ist und entsprechend aufwendig sowie fehleranfällig ist.

Der vorliegenden Anmeldung liegt mithin die Aufgabe zugrunde, eine Ballenpresse bereitzustellen, bei der ein Nachladen einer neuen Wickelrolle im Vergleich zum Stand der Technik möglichst einfach erfolgen kann.

Die zugrunde liegende Aufgabe wird mittels einer Ballenpresse mit den Merkmalen des Anspruchs 1 gelöst. Vorteilhafte Ausgestaltungen ergeben sich aus den Unteransprüchen 2 bis 10.

Der Tragrahmen der Wickeleinrichtung ist typischerweise starr ausgebildet. Der Wickelarm, der drehbar relativ zu dem Tragrahmen an letzterem gelagert ist, weist typischerweise eine Gabelform auf. Mittels einer Drehung des Wickelarms, der an seiner Rollenhalterung mit mindestens einer Wickelrolle ausgestattet ist, um einen jeweils einzuwickelnden Ballen herum kann das Wickelmaterial sukzessive auf den Ballen aufgetragen und letzterer somit eingewickelt werden. Hierbei ist es von besonderem Vorteil, wenn der einzuwickelnde Ballen gleichermaßen auf einem Lagerteller rotiert wird, beispielsweise um eine zu einer Drehachse des Wickelarms senkrechte Drehachse. Insbesondere ist es denkbar, dass die Drehachse des Wickelarms senkrecht und die Drehachse des Lagertellers horizontal orientiert sind. Auf diese Weise kann mittels einer fortwährenden Rotation sowohl des Lagertellers als auch des Wickelarms in Kombination mit der Applikation des von der Wickelrolle entnommenen Wickelmaterials der jeweilige Ballen vollständig eingewickelt werden. Das Wickelmaterial kann insbesondere von einer Folie oder einem Netz gebildet sein.

Zur Entnahme des Wickelmaterials von der jeweiligen Wickelrolle ist letztere an der Rollenhalterung an den Wickelarm in aller Regel um eine Längsachse der Wickelrolle frei drehbar gelagert. Auf diese Weise kann das Wickelmaterial trotz fester Lagerung der Wickelrolle an dem Wickelarm ohne Weiteres von der Wickelrolle entnommen werden, wobei sich die Wickelrolle fortwährend um ihre Längsachse dreht.

Dabei versteht es sich, dass eine Wickelrolle nach vollständigem Verbrauch des darauf vorgehaltenen Wickelmaterials gegen eine neue Wickelrolle ausgetauscht werden muss. In der Vergangenheit hat ein solcher Austausch manuell stattfinden müssen, wozu die Ballenpresse insgesamt angehalten werden musste und damit der Arbeitsprozess unterbrochen wurde. Die vorstehend beschriebene Übergabevorrichtung gemäß dem Stand der Technik ist dazu geeignet, selbsttätig eine (neue) Wickelrolle an die Rollenhalterung des Wickelarms zu übergeben und/oder eine (leere) Wickelrolle von der Rollenhalterung zu übernehmen und abzutransportieren. Idealerweise ist die Übergabevorrichtung sowohl dazu geeignet, eine leere Wickelrolle von der Rollenhalterung zu übernehmen als auch eine volle Wickelrolle an die Rollenhalterung zu übergeben.

Erfindungsgemäß weist die Übergabevorrichtung mindestens einen Ladearm auf, der mindestens einen Greifer umfasst. Der Ladearm ist translatorisch bewegbar an der Ballenpresse bewegbar, sodass er verschiedene Positionen an der Ballenpresse einnehmen kann. Insbesondere kann der Ladearm dazu geeignet sein, eine jeweilige Wickelrolle - unabhängig von ihrer Beladung mit Wickelmaterial - zwischen dem Rollenlager und der Rollenhalterung des Wickelarms zu transportieren. Der Greifer umfasst dabei zumindest zwei relativ zueinander bewegliche Greifelemente, die zwischen einer Greifstellung und einer Freigabestellung überführbar sind. Bei Vorliegen der Greifelemente in der Greifstellung ist der Greifer dazu geeignet, eine Wickelrolle zumindest mittelbar zu greifen und sodann sich gemeinsam mit der Wickelrolle an dem Tragrahmen zu bewegen.

Die erfindungsgemäße Ballenpresse hat viele Vorteile. Zum einen ist es möglich, Wickelrollen automatisch, das heißt ohne Zutun eines Maschinenführers, auszutauschen, sodass im Falle eines vollständigen Verbrauchs des Wickelmaterials von einer Wickelrolle der Betrieb der Ballenpresse möglichst zügig weitergeführt werden kann. Die Übergabeeinrichtung mit ihrem mindestens einen Ladearm ist dazu geeignet, einen Austausch der Wickelrolle an dem Wickelarm vorzunehmen. Aufgrund seiner Bewegbarkeit an der Ballenpresse kann der Ladearm zudem vergleichsweise klein ausgebildet sein, da er eine Überbrückung einer Wegstrecke zwischen dem Rollenlager und dem Wickelarm mittels einer translatorischen Bewegung an der Ballenpresse überbrücken kann. Weiterhin bietet der Greifer die Möglichkeit, eine jeweilige Wickelrolle zuverlässig zu greifen, wobei die Überführung der Greifelemente zwischen der Greif- und der Freigabestellung die Steuerung des Greifers besonders einfach gestaltet.

In einer vorteilhaften Ausgestaltung der erfindungsgemäßen Ballenpresse ist der Ladearm translatorisch an dem Tragrahmen gelagert. Insbesondere kann der Tragrahmen über einen in sich geraden oder gebogenen Rohrabschnitt verfügen, entlang dessen der Ladearm verfahrbar ist. Als besonders sinnvoll erscheint es dabei, den Ladearm dazu zu befähigen, eine vertikale Bewegung auszuführen, um eine in aller Regel vorliegende Höhenniveaudifferenz zwischen dem Rollenlager und der Rollenhalterung des Wickelarms überbrücken zu können. Typischerweise ist das Rollenlager in einem oberen Bereich der Ballenpresse angeordnet, beispielsweise außen an einem Gehäuse der Ballenpresse, während die Rollenhalterung in aller Regel an einem unteren Ende des Wickelarms angeordnet ist.

Weiterhin kann es von Vorteil sein, wenn die Übergabevorrichtung eine Fahrstange aufweist, die an dem Tragrahmen der Wickeleinrichtung angeordnet ist, wobei der mindestens eine Ladearm entlang der Fahrstange verfahrbar gelagert ist. Die Fahrstange kann beispielsweise von einer Gewindespindel gebildet sein, die als Getriebe für den mindestens einen Ladearm verwendbar ist. Eine solche Fahrstange kann besonders einfach mittels eines Elektromotors angetrieben werden.

Die erfindungsgemäße Ballenpresse weiter ausgestaltend ist der mindestens eine Ladearm um eine zu seiner Längsachse senkrechte Schwenkachse verschwenkbar gelagert. Mit anderen Worten ist der Ladearm bei einer solchen Ausgestaltung zusätzlich zu seiner translatorischen Bewegbarkeit ferner mit einer rotatorischen Bewegbarkeit ausgestattet. Dieser weitere Freiheitsgrad ist besonders günstig, um jeweilige Wickelrollen zu bewegen und insbesondere zwischen den Rollenhalterungen des Wickelarms sowie des Rollenlagers zu überführen. In einer besonders vorteilhaften Ausgestaltung fällt eine Schwenkachse des Ladearms mit einer Mittelachse eines Führungsbauteils zusammen, entlang dessen der Ladearm translatorisch bewegbar ist. Besagtes Führungsbauteil kann gemäß vorstehender Beschreibung insbesondere von einer Führungsstange oder unmittelbar von einem Abschnitt des Tragrahmens gebildet sein. Vorzugsweise ist das Führungsbauteil in sich gerade. Die Schwenkachse fiele dann in der bevorzugten Variante mit der Längsachse des Führungsbauteils zusammen.

In einer weiterhin vorteilhaften Ausgestaltung weist die Übergabevorrichtung mindestens zwei, vorzugsweise genau zwei, Ladearme auf. Die Verwendung von zwei Ladearmen vermag den Austauschvorgang einer leeren Wickelrolle an dem Wickelarm gegen eine neue, volle Wickelrolle deutlich zu beschleunigen. Insbesondere ist es möglich, dass die Übertragungseinrichtung insgesamt zwei Wickelrollen transportiert, wobei beispielsweise einer der Ladearme eine leere Wickelrolle von dem Wickelarm übernimmt, während der zweite Ladearm bereits eine volle Wickelrolle mit sich führt und unmittelbar an die Rollenhalterung des Wickelarms übergeben kann. Auf diese Weise kann das ansonsten nötige Abwarten eines vollen Wechselzyklus, bei dem ein einziger Ladearm die leere Wechselrolle zunächst an das Rollenlager übergeben muss, um sodann eine volle Wickelrolle dort abzuholen und schließlich an den Wickelarm zu übergeben, entfallen.

Vorteilhafterweise erstrecken sich die Ladearme an der Übergabevorrichtung in parallelen, voneinander beabstandeten Ebenen. Im Falle einer typischen vertikalen Ausrichtung des jeweiligen Führungsbauteils bedeutet dies, dass die Ladearme auf unterschiedlichen Höhenniveaus angeordnet sind.

Unabhängig davon sind die Ladearme idealerweise an einem gemeinsamen Fahrschlitten angeordnet und sind dadurch relativ zueinander festgelegt. Alternativ ist es gleichwohl ebenso denkbar, dass die Ladearme jeweils unabhängig voneinander an der Ballenpresse verfahren und ggf. verschwenken können.

Bei Verwendung mindestens zweier Ladearme ist es bevorzugt, wenn sämtliche Ladearme baugleich ausgebildet sind. Auf diese Weise kann ein maximales Maß an Gleichteilen für die Übergabeeinrichtung erzielt werden.

Ferner kann eine solche Ausgestaltung von Vorteil sein, bei der zwei benachbarte Ladearme derart relativ zueinander verdreht um eine gemeinsame Lagerachse angeordnet sind, dass ihre Längsachsen - relativ zu der gemeinsamen Lagerachse betrachtet - gemeinsam einen Winkel zwischen 0° und 180°, vorzugsweise zwischen 0° und 90°, weiter vorzugsweise zwischen 0° und 45°, einschließen. Besagter Winkel ist besonders einfach zu bestimmen, falls sich die jeweiligen Ladearme in einer gemeinsamen Ebene befinden bzw. in einer gemeinsamen Ebene liegen. In dem vorstehend bereits als bevorzugt beschriebenen Fall, gemäß dessen die Ladearme in unterschiedlichen Ebenen angeordnet sind, schneiden sich die Längsachsen der Ladearme im Unendlichen. Die Bestimmung des Winkels zwischen den Längsachsen erfolgt mithin lediglich relativ zu der genannten Lagerachse, die beispielsweise von einer gemeinsamen Schwenkachse der Ladearme gebildet sein kann. Alternativ kann die Betrachtung auch an Projektionen der Längsachsen erfolgen, die in einer gemeinsamen, jeweils zu den Längsachsen der Ladearme parallelen Ebene verlaufen. Der beschriebene Winkel(versatz) zwischen den benachbarten Ladearmen bzw. deren Längsachsen ist besonders sinnvoll, um zwei vorteilhafte technische Effekte miteinander zu kombinieren. Zum einen können aufgrund des Winkels beide Ladearme gleichzeitig mit Wechselrollen beladen werden, ohne dass letztere miteinander kollidieren. Folglich ist eine Doppelbelegung der Übergabeeinrichtung möglich.

Zum anderen begünstigt ein vergleichsweise kleiner Winkel zwischen den Ladearmen den Bauraumbedarf der Übergabeeinrichtung. Somit versteht es sich, dass einander gegenüberliegende Ladearme, deren Längsachsen um 180° relativ zueinander verdreht sind, vergleichsweise viel Raum einnehmen, der insbesondere dann vorgehalten werden muss, wenn die Ladearme verschwenkbar ausgeführt sind. Eine Anordnung der Ladearme in einem Winkel von beispielsweise 45° oder sogar nur 30° vermag diesen Bauraumbedarf erheblich zu reduzieren. Weiterhin sind Schwenkwege der einzelnen Ladearme deutlich kürzer, wodurch wiederum die Dauer eines Wechselvorgangs für eine jeweilige Wickelrolle an dem Wickelarm reduzierbar ist.

Die erfindungsgemäße Ballenpresse weiter ausgestaltend sind die beiden Greifelemente des Greifers des mindestens einen Ladearms von miteinander korrespondierenden Greifbacken gebildet. Diese Greifbacken sind ähnlich des zoologischen Prinzips des opponierbaren Daumens dazu geeignet, einen Gegenstand gewissermaßen mittels Einklemmens zwischen den Greifbacken zu greifen. Dabei wird ein Reibschluss erzeugt, wobei Andrückkräfte der Greifbacken, die vorzugsweise symmetrisch ausgebildet sind, auf beide Greifbacken vom Betrag her identisch sind. Die Greifbacken können im Zuge ihrer Überführung von der Freigabestellung in die Greifstellung derart aufeinander zu bewegt werden, dass ein Abstand zwischen korrespondierenden Greifflächen der Greifbacken verringerbar ist. Die Greifflächen sind dazu geeignet, in unmittelbaren Kontakt mit dem zu greifenden Gegenstand zu treten.

Vorzugsweise weist mindestens eine Wickelrolle, vorzugsweise jede Wickelrolle, mindestens einen Greifabschnitt auf, der mittels der Greifelemente eines jeweiligen Ladearms greifbar ist. Dabei ist es besonders zu bevorzugen, die Abmessungen der Greifelemente sowie des Greifabschnitts derart aufeinander abzustimmen, dass ein möglichst zuverlässiger Reibschluss ausgebildet werden kann. Der Greifabschnitt ist zudem vorteilhafterweise rotationssymmetrisch ausgebildet, sodass die jeweilige Wickelrolle unabhängig von ihrer Drehausrichtung greifbar ist.

In einer weiterhin bevorzugten Ausführungsform sind die Greifelemente jeweils um eine Schwenkachse, vorzugsweise um eine gemeinsame Schwenkachse, verschwenkbar ausgebildet. Alternativ ist eine translatorische oder kombinierte translatorisch-rotatorische Bewegung denkbar. Die verschwenkbare bzw. rotatorische Bewegbarkeit ist gleichwohl besonders günstig, da sie vergleichsweise einfach umgesetzt werden kann und zudem optimal für eine Greifwirkung geeignet ist. Eine entsprechende Ausführung ergibt sich anhand des nachstehenden Ausführungsbeispiels.

Weiterhin ist eine solche Ballenpresse besonders vorteilhaft, bei der der Ladearm mindestens einen Linearantrieb umfasst. Ein solcher Linearantrieb, der vorzugsweise von einer Kolben-Zylinder-Einheit gebildet sein kann, ist besonders gut geeignet, die Greifelemente anzutreiben. Insbesondere können die Greifelemente, sofern diese verschwenkbar ausgebildet sind, derart ausmittig zu dem Linearantrieb angeordnet sein, dass eine lineare Bewegung eines Antriebselements des Linearantriebs an einer Stelle auf die jeweilige Greifelemente wirkt, die beabstandet von der Schwenkachse der Greifelemente angeordnet ist. Die von dem Linearantrieb übertragene Antriebskraft wirkt mithin unter einem Hebelarm relativ zu der Schwenkachse auf das Greifelement, wodurch dieses in die gewünschte Drehbewegung überführt wird. Auf diese Weise können die Greifelemente besonders einfach zwischen ihrer Freigabestellung und ihrer Greifstellung überführt werden.

Vorteilhafterweise sind beide Greifelemente eines Greifers eines Ladearms an einer gemeinsamen Schwenkachse angelenkt, wobei der Ladearm einen einzigen Linearantrieb aufweist, der mittels eines gabelförmigen Übertragungsbauteils dazu geeignet ist, eine Antriebskraft auf beide Greifelemente zu übertragen. Hierzu ist der Ladearm insgesamt vorzugsweise spiegelsymmetrisch bezüglich einer zu seiner Längsachse parallelen und seiner Querachse senkrechten Symmetrieebene ausgebildet, wobei eine Längsachse des Linearantriebs vorzugsweise innerhalb der Symmetrieebene liegt.

Die erfindungsgemäße Ballenpresse wird nachstehend anhand eines Ausführungsbeispiels, das in den Figuren dargestellt ist, näher erläutert. Es zeigt:
- Fig. 1:: Einen Querschnitt durch eine erfindungsgemäße Ballenpresse,
- Fig. 2:: Ein Darstellungspaar, umfassend eine isometrische Ansicht sowie eine Draufsicht eines Ausschnitts der Ballenpresse gemäß Figur 1, wobei sich eine Übergabeeinrichtung in einer Übernahmestellung befindet,
- Fig. 3:: Das Darstellungspaar gemäß Figur 2, wobei sich die Übergabeeinrichtung in einer Ladestellung befindet,
- Fig. 4:: Das Darstellungspaar gemäß Figur 2, wobei sich die Übergabeeinrichtung in einer Übergabestellung befindet,
- Fig. 5:: Das Darstellungspaar gemäß Figur 3, wobei sich die Übergabeeinrichtung in einer Entsorgungsstellung befindet,
- Fig. 6:: Ein Detail der Übergabeeinrichtung,
- Fig. 7:: Ein weiteres Detail der Übergabeeinrichtung und
- Fig. 8:: Ein Querschnitt durch eine Übergabeeinrichtung.

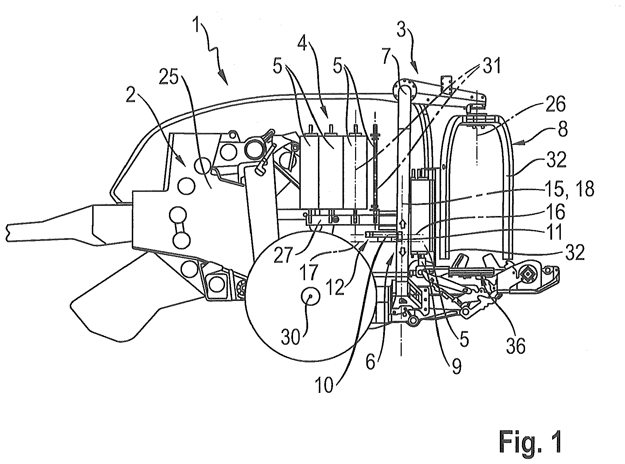

Ein erstes Ausführungsbeispiel, das in den **Figur 1** gezeigt ist, umfasst eine Ballenpresse **1,** die eine Presseinrichtung **2** sowie eine Wickeleinrichtung **3** umfasst. Die Presseinrichtung **2** ist mittels einer zugeordneten Presskammer **25** dazu geeignet, mittels der Ballenpresse **1** von einem Untergrund aufgenommenes Erntegut zu einem Rundballen zu pressen. Bei der hier gezeigten Ballenpresse **1** handelt es sich mithin um eine Rundballenpresse. Die Erfindung ist gleichwohl auch für andere Ballenpressentypen verwendbar, insbesondere für Quaderballenpressen.

Die Ballenpresse **1** verfügt ferner über ein Rollenlager **4,** mittels dessen eine Mehrzahl von Wickelrollen **5** an der Ballenpresse **1** gelagert wird. Hierzu verfügt das Rollenlager **4** über eine Rollenhalterung **27,** die zur Aufnahme einer Mehrzahl von Wickelrollen **5** geeignet ist. Das Rollenlager **4** ist hier außerhalb eines Gehäuses der Ballenpresse **1** sowie oberhalb einer Fahrachse **30** der letzteren angeordnet. Die in bzw. an dem Rollenlager **4** vorgehaltenen Wickelrollen **5** bevorraten jeweils ein Wickelmaterial, das hier von einer typischen PE Folie gebildet ist. Die Wickelrollen **5** sind rotationssymmetrisch bezüglich einer Rollenachse **31.** Hierdurch sind die Wickelrollen **5** dazu geeignet, an ihrer Rollenachse **31** gelagert und sodann "abgerollt" zu werden. Dabei wird das Wickelmaterial sukzessive von der Wickelrolle **5** abgezogen, wobei letztere insbesondere um ihre Rollenachse **31** rotieren kann, wobei der Vorrat des Wickelmaterials auf der Wickelrolle **5** fortwährend abnimmt.

Die Wickelrollen **5** werden für die Wickeleinrichtung **3** verwendet. Letztere umfasst in dem gezeigten Beispiel einen Tragrahmen **7** sowie einen daran angeschlossenen Wickelarm **8.** Der Wickelarm **8** ist unter Ausbildung eines Drehgelenks an dem in sich starren Tragrahmen **7** angeschlossen, sodass der Wickelarm **8** um eine Drehachse **26** relativ zu dem Wickelarm **8** drehbar gelagert ist. Der Wickelarm **8** ist hier ferner gabelförmig bzw. U-förmig ausgebildet und umfasst entsprechend zwei Armfortsätze **32**und ist symmetrisch bezogen auf die Drehachse **26** ausgebildet.

Der Wickelarm **8** kann über zwei Rollenhalterungen **9** verfügen, wobei jeweils eine Rollenhalterung **9** einem der Armfortsätze **32** des Wickelarms **8** zugeordnet ist. Auch ist es denkbar, lediglich einen Armfortsätze **32** mit einer Rollenhalterung **9** auszustatten. Die Rollenhalterungen **9** sind dazu geeignet, jeweils eine Wickelrolle **5** aufzunehmen. Die Wickelrollen **5** werden vorteilhafterweise derart an bzw. in der Rollenhalterung **9** gelagert, dass sie um ihre Rollenachse **31** relativ zu dem Wickelarm **8** drehbar sind, sodass das Wickelmaterial von der jeweiligen Wickelrolle **5** abgerollt werden kann. Im Betrieb der Wickeleinrichtung **5** wird ein fertig gepresster Ballen, der in den Figuren nicht dargestellt ist, auf einem Lagerteller **36** der Wickelvorrichtung **3** gelagert, wobei der Lagerteller **36** zwischen den Armfortsätzen **32** positioniert ist. Dies hat zur Folge, dass der um seine Drehachse **26** drehende Wickelarm **8** einen auf dem Lagerteller **36** positionierten Ballen "umrunden" kann, wobei das von den Wickelrollen **5** zur Verfügung gestellte Wickelmaterial derart appliziert wird, dass der Ballen sukzessive "eingewickelt" wird. Hierzu kann der Lagerteller **36** ebenfalls drehantreibbar ausgebildet sein.

Es versteht sich, dass die Wickelrollen **5** nach dem vollständigen Abwickeln des Wickelmaterials regelmäßig ausgetauscht werden müssen. Das heißt, dass die Rollenhalterungen **9** des Wickelarms **8** mit neuen, vollen Wickelrollen **5** bestückt werden müssen. Hierzu ist bei der gezeigten erfindungsgemäßen Ballenpresse **1** die Übergabeeinrichtung **6** zuständig. Diese umfasst zwei Ladearme **10, 11,** die jeweils einen Greifer **12** aufweisen. Die Übergabeeinrichtung **6** ist in dem gezeigten Beispiel unmittelbar an dem Tragrahmen **7** verfahrbar gelagert, wobei die Ladearme **10, 11** jeweils entlang einer gemeinsamen Lagerachse **18** entlang des Tragrahmens **7** hoch und runter bewegt werden können. Alternativ können die Ladearme **10, 11** jeweils entlang eigener Lagerachse **18** bewegt werden. Die Bewegung der Übergabeeinrichtung **6** erfolgt hier entlang eines in sich geraden Abschnitts des Tragrahmens **7,** der hier vertikal orientiert ist.

Die Ladearme **10, 11** sind gewissermaßen "übereinander" angeordnet. Das heißt, dass sich deren Längsachsen **14** in parallel zueinander angeordneten, zu der Lagerachse **18** senkrechten Ebenen **16, 17** erstrecken, die voneinander beabstandet sind. Bezogen auf die Lagerachse **18** sind die beiden Ladearme **10, 11** um einen Winkel **19** relativ zueinander versetzt angeordnet. Dieser Winkel **19** beträgt hier ca. 30° und ist in dem gezeigten Beispiel nicht veränderbar. Grundsätzlich ist es gleichwohl auch (unabhängig von der sonstigen Ausgestaltung der jeweiligen Ballenpresse) denkbar, relativ zu einander um eine gemeinsame oder separate Schwenkachsen verschwenkbare Ladearme **10, 11** vorzusehen.

Die Ladearme **10, 11** sind neben ihrer Bewegbarkeit bzw. Verfahrbarkeit entlang des Tragrahmens **7** ferner gemeinsam schwenkbar ausgebildet. Hierzu sind die Ladearme **10, 11** relativ zu einer (hier gemeinsamen) Schwenkachse **15** verschwenkbar, wobei in dem gezeigten Beispiel die Schwenkachse **15** mit der Lagerachse **18** zusammenfällt. Wie sich besonders gut anhand der **Figuren 1 bis 5** ergibt, ist die Verschwenkbarkeit hilfreich, um Wickelrollen **5** zwischen den Rollenhalterungen **9, 27** des Wickelarms **8** bzw. des Rollenlagers **4** auszutauschen.

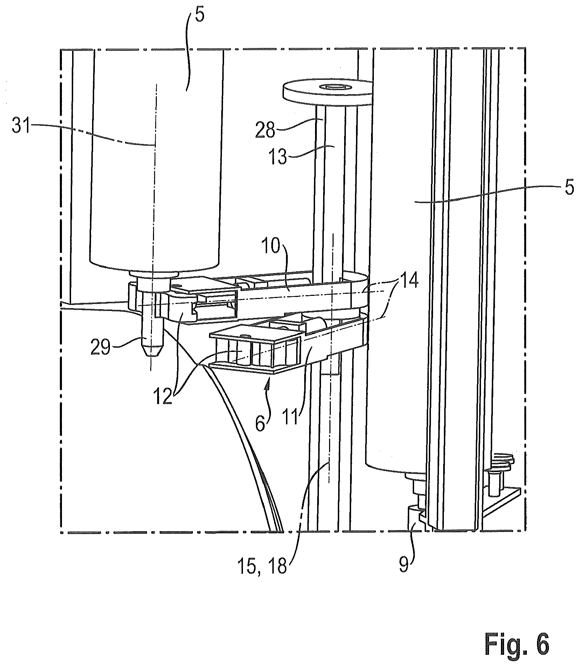

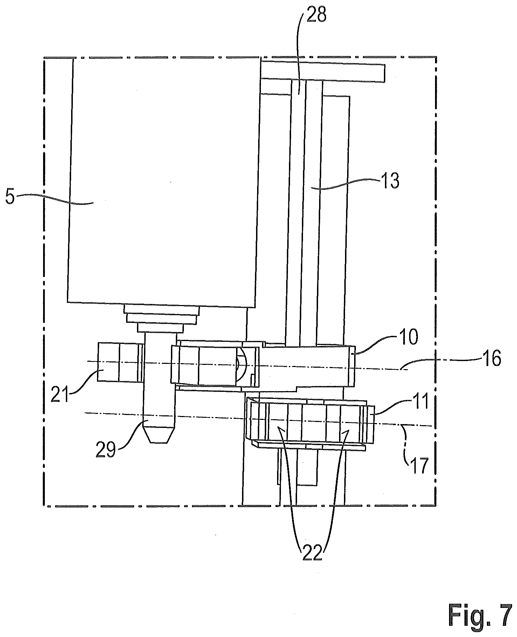

Weiterhin sind die Ladearme **10, 11** in dem gezeigten Beispiel fest miteinander verbunden, sodass eine Relativbewegung beider Ladearme **10, 11** zueinander nicht möglich ist. Das heißt, dass die Ladearme **10, 11** weder relativ zueinander um die gemeinsame Schwenkachse **15** verschwenkbar, noch relativ zueinander entlang die gemeinsame Lagerachse **18** bewegbar ausgebildet sind. Stattdessen sind die Ladearme **10, 11** gewissermaßen als eine Einheit ausgebildet. Eine entsprechende Ausgestaltung ergibt sich besonders gut anhand der nachstehend im Detail dargelegten **Figuren 6 bis 8****.**

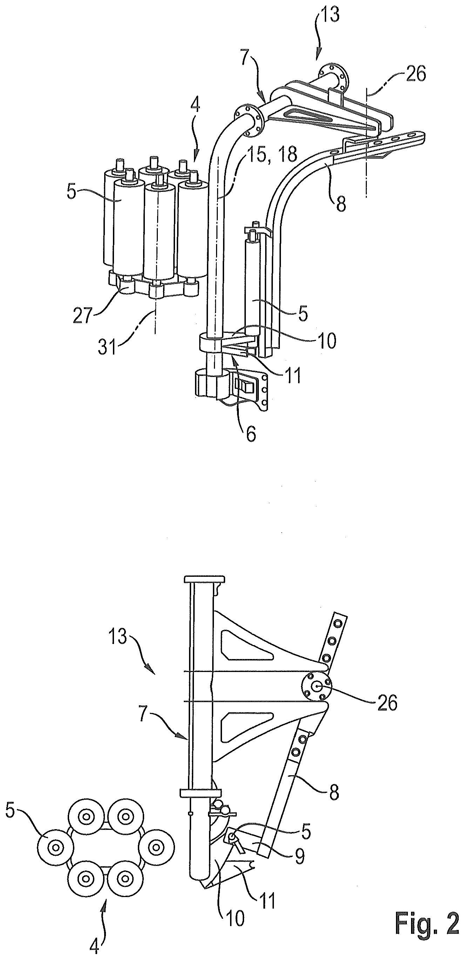

Die Verwendung der Übergabeeinrichtung **6** an der erfindungsgemäßen Ballenpresse **1** ergibt sich besonders gut anhand des Ausführungsbeispiels, das in den **Figuren 2 bis 5** dargestellt ist. Dieses unterscheidet sich von dem Ausführungsbeispiel gemäß **Figur 1** lediglich in der Ausbildung des Wickelarms **8,** der hier nur einen Armfortsatz **32** anstelle von zwei Armfortsätzen **32** aufweist. Der Wickelarm **8** des Ausführungsbeispiels gemäß der **Figuren 2 bis 5** ist demzufolge L-förmig ausgebildet.

Besagte Figuren zeichnen einen vollständigen Wechselzyklus einer leeren Wickelrolle **5** nach. Das dargestellte Verfahren geht von einer Situation aus, bei der eine an der Rollenhalterung **9** des Wickelarms **8** angeordnete Wickelrolle **5** leer ist, das heißt kein Wickelmaterial mehr vorhält. Die Übergabeeinrichtung **6** wird sodann dazu genutzt, die leere Wickelrolle **5** gegen eine neue Wickelrolle **5** auszutauschen. In dem gezeigten Beispiel wird der Wickelarm **8** entsprechend in eine Übergabeposition bewegt, in der die Rollenhalterung **9** derart positioniert ist, dass die Ladearme **10, 11** sie grundsätzlich erreichen können. Die Übergabeeinrichtung **6** wird entlang des Tragrahmens **7** bzw. einer Lagerachse **18** in eine untere Endposition bewegt, die in **Figur 2** veranschaulicht ist. In dieser unteren Endposition können die Ladearme **10, 11** grundsätzlich die Rollenhalterung **9** erreichen. Nunmehr wird die leere Wickelrolle **5** mittels des ersten Ladearms **10** von der Rollenhalterung **9** übernommen. In dem gezeigten Beispiel ist der Ladearm **10** relativ zu der Lagerachse **18** betrachtet oberhalb des anderen Ladearms **11** angeordnet. Dies ist gleichermaßen umgekehrt denkbar.

Um die leere Wickelrolle **5** übernehmen zu können, werden die Ladearme **10, 11** relativ zu der Schwenkachse **15** verschwenkt, bis der Greifer **12** des Ladearms **10** die leere Wickelrolle **5** greifen kann. Ein möglicher Greifmechanismus als solcher wird nachstehend gesondert erläutert. Die Entnahme der Wickelrolle **5** aus ihrer Rollenhalterung **9** kann ebenfalls mittels einer Verschwenkung des Ladearms **10** erfolgen. Zusätzlich ist es denkbar, dass die Übergabeeinrichtung **6** nach dem Greifen der Wickelrolle **5** mittels des Ladearms **10** ein Stück entlang der Lagerachse **18** nach oben verfährt, um die Wickelrolle **5** aus der Rollenhalterung **9** zu heben und auf diese Weise einen beispielsweise ausgebildeten Formschlussmechanismus zwischen Wickelrolle **5** und Rollenhalterung **9** zu lösen. Auch ist ein "Herausschwenken" der leeren Wickelrolle **5** aus der Rollenhalterung **9** denkbar.

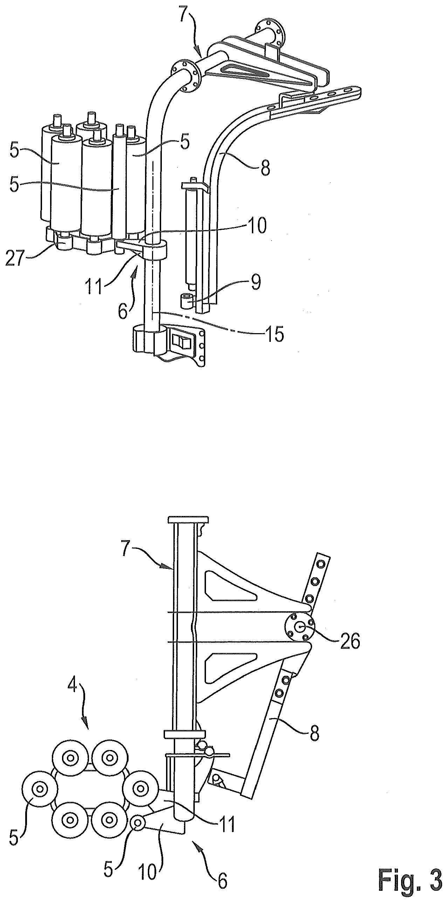

Nach der Übernahme der Wickelrolle **5** wird die Übergabeeinrichtung **6** entlang des Tragrahmens **7** nach oben in Richtung des Rollenlagers **4** in eine obere Endposition bewegt. Die Ladearme **10, 11** werden entweder gleichzeitig, davor oder anschließend um die Schwenkachse **15** relativ zu dem Tragrahmen **7** verschwenkt, sodass der noch nicht belegte Ladearm **11** dazu geeignet ist, eine volle Wickelrolle **5** von dem Rollenlager **4** zu übernehmen. Der Moment der Übernahme ist in **Figur 3** veranschaulicht. Der Ladearm **10** ist weiterhin mit der leeren Wickelrolle **5** beladen.

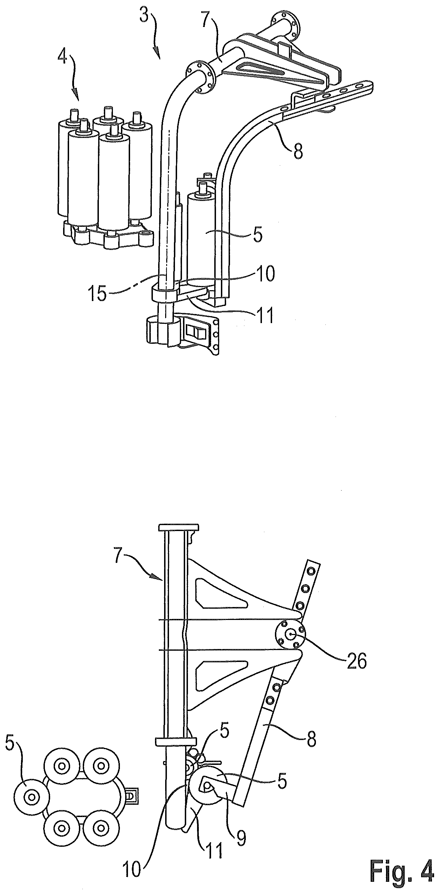

Anschließend wird die Übergabeeinrichtung **6** wieder in ihre untere Endposition bewegt, wobei die Ladearme **10, 11** derart verschwenkt werden, dass die volle Wickelrolle **5** an die Rollenhalterung **9** des Wickelarms **8** übergeben werden kann. Entsprechendes ist besonders gut **Figur 4** entnehmbar. Besagte Übergabe wird sodann vorgenommen. Die Verschwenkung der Ladearme **10, 11** kann grundsätzlich und unabhängig von der sonstigen Ausgestaltung der Ballenpresse **1** in beide Richtungen relativ zu der Schwenkachse **15** verschwenkt werden, das heißt sowohl im als auch gegen den Uhrzeigersinn. Die beschriebene Anordnung der beiden Ladearme **10, 11** in einem Winkelversatz relativ zu der Schwenkachse **15** von ca. 30° bietet dabei den Vorteil, dass die Schwenkwinkel bzw. "Schwenkwege", die die Ladearme **10, 11** insgesamt zurücklegen müssen, vergleichsweise kurz ausfallen. Hierdurch kann die Wechselprozedur kurz gehalten werden, sodass der Betrieb der Wickeleinrichtung **3** zügig wieder aufgenommen werden kann.

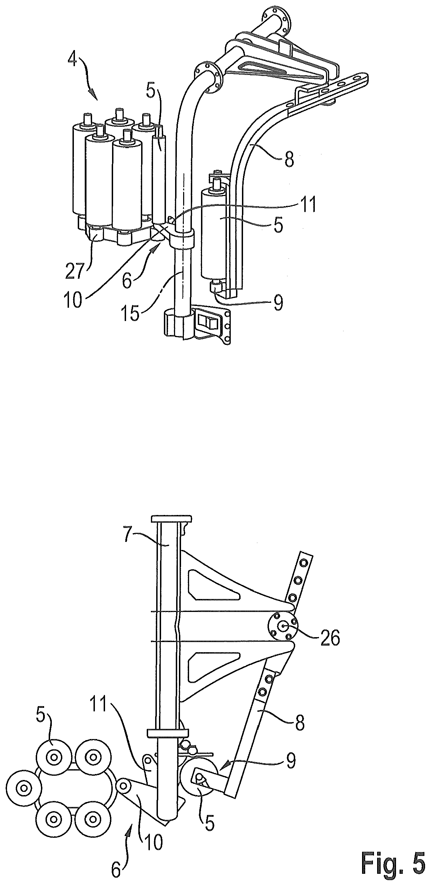

Nach der Übergabe der neuen Wickelrolle **5** an den Wickelarm **8** wird schließlich die Übergabeeinrichtung **6** wieder in ihre obere Endposition bewegt und die noch vom ersten Ladearm **10** gehaltene leere Wickelrolle **5** an den freien Platz der Rollenhalterung **27** des Rollenlagers **4** übergeben. Dies ist in **Figur 5** veranschaulicht. Die Wechselprozedur ist damit abgeschlossen.

In den **Figuren 6 bis 8** ist eine leicht abgewandelte Ausführungsform der erfindungsgemäßen Ballenpresse **1** dargestellt, bei der die Übergabeeinrichtung **6** nicht unmittelbar an dem Tragrahmen **7,** sondern an einer separaten Fahrstange **13** gelagert ist. Zudem sind die Ladearme **10, 11** in leicht abgewandelter relativer Position zueinander ausgeführt, wobei im Unterschied zu der Ausführungsform gemäß der **Figuren 2 bis 5** der obere Ladearm **10** "rechts" und der untere Ladearm **11** "links" angeordnet sind. Die Fahrstange **13** ist hier in Form einer Gewindespindel ausgebildet, wobei die Übergabeeinrichtung **6** mit einem komplementären Gewinde ausgestattet ist, sodass eine Rotation der Fahrstange **13** zu einer Verlagerung der Übergabeeinrichtung **6** entlang der Fahrstange **13** führt. Hierzu wirkt die Fahrstange **13** ferner mit einer Führungsstange **28** zusammen, mittels derer eine Winkelstellung der Übergabeeinrichtung **6** bzw. der Ladearme **10, 11** relativ zu der Fahrstange **13** festlegbar ist.

Die Ladearme **10, 11** sind jeweils mit einem Greifer **12** ausgestattet. Jeder Greifer **12** verfügt in dem gezeigten Beispiel über zwei Greifelemente **20, 21,** die hier in Form von Greifbacken ausgebildet sind. Die Greifelemente **20, 21** sind verschwenkbar an dem jeweiligen Ladearm **10, 11** gelagert, sodass sie mittels einer Schwenkbewegung zwischen einer Freigabestellung und einer Greifstellung überführbar sind. In der Freigabestellung sind die Greifelemente **20, 21** derart "aufgeschwenkt", dass sie einen korrespondierenden Greifzapfen **29** einer jeweiligen Wickelrolle **5** nicht halten können bzw. keinen Reibschluss mit einem Greifzapfen **29** ausbilden können. Um dies zu erreichen werden die Greifelemente **20, 21** ausgehend von der Freigabestellung in ihre Greifstellung überführt, wobei die Greifelemente **20, 21** relativ zu einer Schwenkachse **23** verschwenkt und auf diese Weise aufeinander zu bewegt werden. In dem gezeigten Ausführungsbeispiel sind beide Greifelemente **20, 21** eines Greifers **12** bezüglich auf eine gemeinsame Schwenkachse **23** verschwenkbar gelagert. Im Zuge der Bewegung aufeinander zu sind die Greifelemente **20, 21** schließlich dazu geeignet, den Greifzapfen **29** zu greifen, der zwischen den Greifelementen **20, 21** positioniert ist. Die Greifelemente **20, 21** bilden dabei mittels zugeordneter Greifflächen **22** einen unmittelbaren Kontakt mit dem jeweiligen Greifzapfen **29** aus, sodass ein Reibschluss ausgebildet wird. Auf diese Weise kann eine jeweilige Wickelrolle **5** mittels des Greifers gegriffen und sodann mittels der Übergabeeinrichtung **6** als solcher an der Ballenpresse bewegt werden.

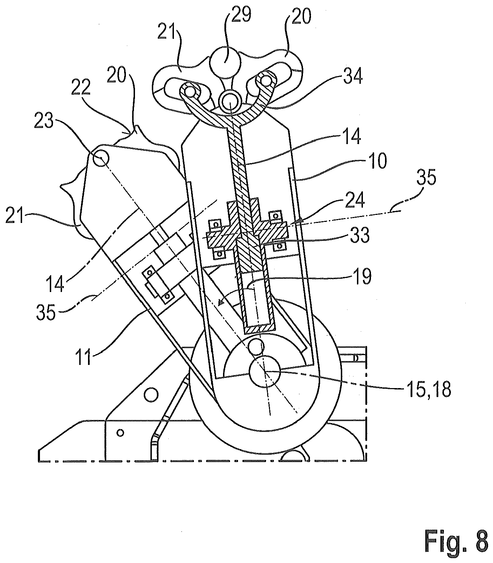

Zum Antrieb der Greifelemente **20, 21** verfügen die Ladearme **10, 11** in dem gezeigten Beispiel jeweils über einen Linearantrieb **24,** die hier jeweils in Form einer Kolben-Zylinder-Einheit ausgebildet sind. Letztere können insbesondere hydraulisch, pneumatisch oder elektrisch betrieben werden. Die Linearantriebe **24** ergeben sich besonders gut anhand von **Figur 8****.** Ein Kolben **33** des Linearantriebs **24** ist hier parallel zu der Längsachse **14** des zugehörigen Ladearms **10, 11** ausgerichtet, wobei die Ladearme **10, 11** bezogen auf eine die jeweiligen Längsachse **14** beinhaltenden und senkrecht zu einer Querachse **35** verlaufenden Symmetrieachse spiegelsymmetrisch ausgebildet sind. An einem dem übrigen Linearantrieb **24** abgewandten Ende wirkt der Kolben **33** mit einem Gabelelement **34** zusammen, das jeweils eine Kraft übertragende Verbindung mit den beiden Greifelementen **20, 21** bewirkt. Hierzu verfügt das Gabelelement **26** über Zapfen, die in Längsnuten der Greifelemente **20, 21** eingreifen und dadurch einen Formschluss ausbilden. Dieser Formschluss bewirkt, dass eine translatorische Bewegung des Gabelelements **34** in eine Drehbewegung der Greifelemente um deren gemeinsame Schwenkachse **23** übersetzt wird, da die Zapfen des Gabelelements **34** ausmittig zu der Schwenkachse **23** mit den Greifelementen **20, 21** eingreifen. Der Linearantrieb **24** ist mithin besonders gut geeignet, einen jeweiligen Greifer **12** eines jeweiligen Ladearms **10, 11** anzutreiben und zwischen seiner Freigabe- und seiner Greifstellung zu überführen.

### Bezugszeichenliste

- 1: Ballenpresse
- 2: Presseinrichtung
- 3: Wickeleinrichtung
- 4: Rollenlager
- 5: Wickelrolle
- 6: Übergabevorrichtung
- 7: Tragrahmen
- 8: Wickelarm
- 9: Rollenhalterung
- 10: Ladearm
- 11: Ladearm
- 12: Greifer
- 13: Fahrstange
- 14: Längsachse
- 15: Schwenkachse
- 16: Ebene
- 17: Ebene
- 18: Lagerachse
- 19: Winkel
- 20: Greifelement
- 21: Greifelement
- 22: Greiffläche
- 23: Schwenkachse
- 24: Linearantrieb
- 25: Presskammer
- 26: Drehachse
- 27: Rollenhalterung
- 28: Führungsstange
- 29: Greifzapfen
- 30: Fahrachse
- 31: Rollenachse
- 32: Armfortsatz
- 33: Kolben
- 34: Gabelelement
- 35: Querachse
- 36: Lagerteller

## Patentansprüche

1. Landwirtschaftliche Ballenpresse (1), insbesondere Rundballenpresse, umfassend
- mindestens eine Presseinrichtung (2) zum Pressen von Erntegut zu einem Ballen,
- mindestens eine Wickeleinrichtung (3) zum Umwickeln eines gepressten Ballens mit einem Wickelmaterial,
- mindestens ein Rollenlager (4) zur Lagerung von mindestens einer Wickelrolle (5) an der Ballenpresse (1) sowie
- mindestens eine Übergabevorrichtung (6) zur Übergabe mindestens einer Wickelrolle (5) an die Wickeleinrichtung (3) und zur Übernahme mindestens einer Wickelrolle (5) von der Wickeleinrichtung (3),
wobei die Wickeleinrichtung (3) einen Tragrahmen (7) sowie mindestens einen an dem Tragrahmen (7) drehbar gelagerten Wickelarm (8) umfasst,
wobei die Übergabevorrichtung (6) mindestens einen zumindest translatorisch an der Ballenpresse (1) bewegbaren Ladearm (10) aufweist, der mindestens einen Greifer (12) umfasst,
**dadurch gekennzeichnet, dass**
der Wickelarm (8) mindestens eine Rollenhalterung (9) aufweist, mittels derer eine Wickelrolle (5) an dem Wickelarm (8) derart lagerbar ist, dass das Wickelmaterial zwecks Einwickelns eines gepressten Ballens sukzessive von der Wickelrolle (5) entnehmbar ist,
wobei mittels der Übergabevorrichtung (6) mindestens eine Wickelrolle (5) an die Rollenhalterung (9) des Wickelarms (8) übergebbar und/oder von der Rollenhalterung (9) übernehmbar ist,
wobei der Greifer (12) mindestens zwei relativ zueinander bewegbare Greifelemente (20, 21) aufweist, die zwischen einer Greifstellung und einer Freigabestellung überführbar sind,
wobei mittels Überführung der Greifelemente (20, 21) in ihre Greifstellung eine Wickelrolle (5) in Kraft übertragender Weise greifbar und mittels Überführung der Greifelemente (20, 21) in ihre Freigabestellung eine gegriffene Wickelrolle (5) freigebbar ist.

2. Ballenpresse (1) nach Anspruch 1, **dadurch gekennzeichnet, dass** der mindestens eine Ladearm (10) translatorisch bewegbar an dem Tragrahmen (7) der Wickeleinrichtung (3) gelagert ist.

3. Ballenpresse (1) nach Anspruch 2, **dadurch gekennzeichnet, dass** die Übergabevorrichtung (6) eine Fahrstange (13) aufweist, die an dem Tragrahmen (7) der Wickeleinrichtung (3) angeordnet ist, wobei der mindestens eine Ladearm (10) entlang der Fahrstange (13) verfahrbar gelagert ist.

4. Ballenpresse (1) nach einem der Ansprüche 1 bis 3, **dadurch gekennzeichnet, dass** der mindestens eine Ladearm (10) um eine zu seiner Längsachse (14) senkrechte Schwenkachse (15) verschwenkbar gelagert ist.

5. Ballenpresse (1) nach einem der Ansprüche 1 bis 4, **dadurch gekennzeichnet, dass** die Übergabevorrichtung (6) mindestens zwei, vorzugsweise genau zwei, Ladearme (10, 11) aufweist, wobei sich die Ladearme (10, 11) vorzugsweise an der Übergabevorrichtung (6) in parallelen, voneinander beabstandeten Ebenen (16, 17) erstrecken.

6. Ballenpresse (1) nach Anspruch 5, **dadurch gekennzeichnet, dass** die Ladearme (10, 11) baugleich ausgebildet sind.

7. Ballenpresse (1) nach Anspruch 5 oder 6, **dadurch gekennzeichnet, dass** zwei benachbarte Ladearme (10, 11) derart relativ zueinander verdreht um eine gemeinsame Lagerachse (18) angeordnet sind, dass ihre Längsachsen (14) - relativ zu der gemeinsamen Lagerachse (18) betrachtet - gemeinsam einen Winkel (19) zwischen 0° und 180°, vorzugsweise zwischen 0° und 90°, weiter vorzugsweise zwischen 0° und 45°, einschließen.

8. Ballenpresse (1) nach einem der Ansprüche 1 bis 7, **dadurch gekennzeichnet, dass** die beiden Greifelemente (20, 21) des Greifers (12) des mindestens einen Ladearms (10, 11) von miteinander korrespondierenden Greifbacken gebildet sind, wobei die Greifbacken im Zuge ihrer Überführung von der Freigabestellung in die Greifstellung derart aufeinander zu bewegt werden, dass ein Abstand zwischen korrespondierenden Greifflächen (22) der Greifbacken verringerbar ist.

9. Ballenpresse (1) nach Anspruch 8, **dadurch gekennzeichnet, dass** die Greifelemente (20, 21) jeweils um eine Schwenkachse (23), vorzugsweise um eine gemeinsame Schwenkachse (23), verschwenkbar ausgebildet sind.

10. Ballenpresse (1) nach Anspruch 8 oder 9, **dadurch gekennzeichnet, dass** der Ladearm (10, 11) mindestens einen Linearantrieb (24) umfasst, der vorzugsweise von einer Kolben-Zylinder-Einheit gebildet ist, wobei der Linearantrieb (24) derart mit den Greifelementen (20, 21) zusammenwirkt, dass eine von dem Linearantrieb (24) bewirkte translatorische Bewegung die Überführung der Greifelementen (20, 21) zwischen deren Freigabestellung und deren Greifstellung bewirkt.

## Claims

1. An agricultural baler (1), in particular a round baler, including
- at least one pressing device (2) for pressing crop material to form a bale,
- at least one wrapping device (3) for wrapping a pressed bale with a wrapping material.
- at least one roll mounting (4) for mounting at least one wrapping roll (5) on the baler (1), and
- at least one transfer device (6) for the transfer of at least one wrapping roll (5) to the wrapping device (3) and for receiving at least one wrapping roll (5) from the wrapping device (3),
wherein the wrapping device (3) includes a carrier frame (7) and at least one wrapping arm (8) mounted rotatably to the carrier frame (7),
wherein the transfer device (6) has at least one loading arm (10) which is moveable at least with a translatory movement on the baler (1) and which includes at least one gripper (12),
**characterised in that**
the wrapping arm (8) has at least one roll holder (9), by means of which a wrapping roll (5) can be mounted to the wrapping arm (8) in such a way that the wrapping material can be taken successively from the wrapping roll for the purposes of wrapping up a pressed bale,
wherein by means of the transfer device (6) at least one wrapping roll (5) can be transferred to the roll holder (9) of the wrapping arm (8) and/or received from the roll holder (9),
wherein the gripper (12) has at least two gripping elements (20, 21) which are moveable relative to each other and which can be transferred between a gripping position and a release position, and
wherein by means of transfer of the gripping elements (20, 21) into their gripping position a wrapping roll (5) can be gripped in a force-transmitting fashion and a gripped wrapping roll (5) can be released by transfer of the gripping elements (20, 21) into their release position.

2. A baler (1) according to claim 1 **characterised in that** the at least one loading arm (10) is mounted moveably with a translatory movement on the carrier frame (7) of the wrapping device (3).

3. A baler (1) according to claim 2 **characterised in that** the transfer device (6) has a travel rod (13) arranged on the carrier frame (7) of the wrapping device (3), wherein the at least one loading arm (10) is mounted displaceably along the travel rod (13).

4. A baler (1) according to one of claims 1 to 3 **characterised in that** the at least one loading arm (10) is mounted pivotably about a pivot axis (15) perpendicular to its longitudinal axis (14).

5. A baler (1) according to one of claims 1 to 4 **characterised in that** the transfer device (6) has at least two and preferably precisely two loading arms (10, 11), wherein the loading arms (10, 11) preferably extend on the transfer device (6) in parallel mutually spaced planes (16, 17).

6. A baler (1) according to claim 5 **characterised in that** the loading arms (10, 11) are of identical structure.

7. A baler (1) according to claim 5 or claim 6 **characterised in that** two adjacent loading arms (10, 11) are arranged rotated about a common mounting axis (18) relative to each other in such a way that their longitudinal axes (14) - considered relative to the common mounting axis 18) - jointly include an angle (19) between 0° and 180°, preferably between 0° and 90°, further preferably between 0° and 45°.

8. A baler (1) according to one of claims 1 to 7 **characterised in that** the two gripping elements (20, 21) of the gripper (12) of the at least one loading arm (10, 11) are formed by mutually corresponding gripping jaws, wherein the gripping jaws in the course of their transfer from the release position into the gripping position are moved towards each other in such a way that a spacing between corresponding gripping surfaces (22) of the gripping jaws can be reduced.

9. A baler (1) according to claim 8 **characterised in that** the gripping elements (20, 21) are respectively adapted to be pivotable about a pivot axis (23), preferably about a common pivot axis (23).

10. A baler (1) according to claim 8 or claim 9 **characterised in that** the loading arm (10, 11) includes at least one linear drive (24) preferably formed by a piston-cylinder unit, wherein the linear drive (24) cooperates with the gripping elements (20, 21) in such a way that a translatory movement caused by the linear drive (24) causes transfer of the gripping elements (20, 21) between their release position and their gripping position.

## Revendications

1. Presse à balles agricole (1), en particulier presse à balles rondes, comprenant
- au moins un équipement de pressage (2) pour presser en forme de balle du produit récolté,
- au moins un équipement d'enrubannage (3) pour enrubanner une balle pressée avec un matériau d'enrubannage,
- au moins un porte-rouleaux (4) pour porter au moins un rouleau d'enrubannage (5) sur la presse à balles (1) ainsi que
- au moins un dispositif de transfert (6) pour transférer au moins un rouleau d'enrubannage (5) vers l'équipement d'enrubannage (3) et pour recueillir au moins un rouleau d'enrubannage (5) provenant de l'équipement d'enrubannage (3),
l'équipement d'enrubannage (3) incluant un bâti porteur (7) ainsi qu'au moins un bras d'enrubannage (8) monté tournant sur le bâti porteur (7), le dispositif de transfert (6) comprenant au moins un bras de chargement (10) qui est déplaçable au moins en translation sur la presse à balles (1) et qui inclut au moins un preneur (12)
**caractérisée en ce que**
le bras d'enrubannage (8) comprend au moins une fixation de rouleau (9) au moyen de laquelle un rouleau d'enrubannage (5) peut être supporté sur le bras d'enrubannage (8) de façon que le matériau d'enrubannage puisse être prélevé successivement sur le rouleau d'enrubannage (5) pour enrubanner une balle pressée,
au moyen du dispositif de transfert (6), au moins un rouleau d'enrubannage (5) pouvant être transféré vers la fixation de rouleau (9) du bras d'enrubannage (8) et/ou recueilli à partir de la fixation de rouleau (9),
le preneur (12) comprenant au moins deux éléments de préhension mobiles l'un par rapport à l'autre (20, 21) qui sont déplaçables entre une position de préhension et une position de libération,
au moyen d'un déplacement des éléments de préhension (20, 21) vers leur position de préhension, un rouleau d'enrubannage (5) pouvant être pris avec une transmission de force et, au moyen d'un déplacement des éléments de préhension (20, 21) vers leur position de libération, un rouleau d'enrubannage (5) pris pouvant être libéré.

2. Presse à balles (1) selon la revendication 1, **caractérisée en ce que** le au moins un bras de chargement (10) est supporté sur le bâti porteur (7) de l'équipement d'enrubannage (3) avec une possibilité de déplacement en translation.

3. Presse à balles (1) selon la revendication 2, **caractérisée en ce que** le dispositif de transfert (6) comporte une barre de déplacement (13) qui est disposée sur le bâti porteur (7) de l'équipement d'enrubannage (3), le au moins un bras de chargement (10) étant monté déplaçable le long de la barre de déplacement (13).

4. Presse à balles (1) selon une des revendications 1 à 3, **caractérisée en ce que** le au moins un bras de chargement (10) est monté pivotant autour d'un axe de pivotement (15) perpendiculaire à son axe longitudinal (14).

5. Presse à balles (1) selon une des revendications 1 à 4, **caractérisée en ce que** le dispositif de transfert (6) comprend au moins deux, de préférence exactement deux, bras de chargement (10, 11), les bras de chargement (10, 11) s'étendant de préférence sur le dispositif de transfert (6) dans des plans parallèles distants l'un de l'autre (16, 17).

6. Presse à balles (1) selon la revendication 5, **caractérisée en ce que** les bras de chargement (10, 11) sont de conception identique.

7. Presse à balles (1) selon la revendication 5 ou 6, **caractérisée en ce que** deux bras de chargement voisins (10, 11) sont disposés avec un décalage mutuel autour d'un axe porteur commun (18) de façon que leurs axes longitudinaux (14) - vus par rapport à un axe porteur commun (18) - forment ensemble un angle (19) entre 0° et 180°, de préférence entre 0° et 90°, plus préférentiellement entre 0° et 45°.

8. Presse à balles (1) selon une des revendications 1 à 7, **caractérisée en ce que** les deux éléments de préhension (20, 21) du preneur (12) du au moins un bras de chargement (10, 11) sont formés par des mâchoires de préhension à correspondance mutuelle, les mâchoires de préhension étant rapprochées l'une de l'autre, lors de leur déplacement de la position de libération vers la position de préhension, de façon à pouvoir réduire une distance entre des surfaces de préhension correspondantes (22) des mâchoires de préhension.

9. Presse à balles (1) selon la revendication 8, **caractérisée en ce que** les éléments de préhension (20, 21) sont conçus pivotants respectivement autour d'un axe de pivotement (23), de préférence autour d'un axe de pivotement commun (23).

10. Presse à balles (1) selon la revendication 8 ou 9, **caractérisée en ce que** le bras de chargement (10, 11) inclut au moins un entraînement linéaire (24) qui est formé de préférence par une unité piston-cylindre, l'entraînement linéaire (24) coopérant avec les éléments de préhension (20, 21) de façon qu'un déplacement en translation provoqué par l'entraînement linéaire (24) provoque le déplacement des éléments de préhension (20, 21) entre leur position de libération et leur position de préhension.
